(19)

**Europäisches Patentamt**

**European Patent Office**

**Office européen des brevets**

(11) **EP 3 727 653 B1**

(12) **EUROPÄISCHE PATENTSCHRIFT**

(45) Veröffentlichungstag und Bekanntmachung des Hinweises auf die Patenterteilung:
**14.02.2024  Patentblatt 2024/07**

(21) Anmeldenummer: **18816073.3**

(22) Anmeldetag: **14.12.2018**

(51) Internationale Patentklassifikation (IPC):
**B01D 53/94** (2006.01)  **B01J 23/63** (2006.01)
**F01N 3/035** (2006.01)  **F01N 3/10** (2006.01)

(52) Gemeinsame Patentklassifikation (CPC):
**B01D 53/945; B01J 23/63; F01N 3/035;**
**F01N 3/101;** B01D 2255/1023; B01D 2255/1025;
B01D 2255/2061; B01D 2255/2063;
B01D 2255/2065; B01D 2255/2066;
B01D 2255/20715; B01D 2255/407;
B01D 2255/908; B01D 2255/9155; B01D 2258/014;

(Forts.)

(86) Internationale Anmeldenummer:
**PCT/EP2018/084902**

(87) Internationale Veröffentlichungsnummer:
**WO 2019/121375 (27.06.2019 Gazette 2019/26)**

(54) **KATALYTISCH AKTIVES PARTIKELFILTER**

CATALYTICALLY ACTIVE PARTICULATE FILTER

FILTRE À PARTICULES À ACTIVITÉ CATALYTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.12.2017  EP 17208615**

(43) Veröffentlichungstag der Anmeldung:
**28.10.2020  Patentblatt 2020/44**

(60) Teilanmeldung:
**23212574.0**

(73) Patentinhaber: UMICORE AG & Co. KG
**63457 Hanau-Wolfgang (DE)**

(72) Erfinder:
• **SCHOENHABER, Jan**
  **64287 Darmstadt (DE)**

• **DEIBEL, Naina**
  **64319 Pfungstadt (DE)**
• **ROESCH, Martin**
  **63110 Rodgau (DE)**
• **SPIESS, Stephanie**
  **64289 Darmstadt (DE)**
• **GOTTHARDT, Meike**
  **60385 Frankfurt (DE)**
• **SCHICHTEL, Nicole**
  **35510 Butzbach Hoch-Weisel (DE)**

(56) Entgegenhaltungen:
**EP-A1- 1 974 810    EP-A1- 2 322 773**
**EP-A1- 2 650 042    WO-A1-2017/109514**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)
     Y02T 10/12

**Beschreibung**

Die vorliegende Erfindung betrifft ein katalytisch aktives Partikelfilter, das sich insbesondere für die Entfernung von Partikeln, Kohlenmonoxid, Kohlenwasserstoffen und Stickoxiden aus dem Abgas von mit stöchiometrischem Luft/Kraftstoff-Gemisch betriebenen Verbrennungsmotoren eignet.

Abgase von mit stöchiometrischem Luft/Kraftstoff-Gemisch betriebenen Verbrennungsmotoren, also z. B. mit Benzin oder Erdgas betriebene Ottomotoren, werden in herkömmlichen Verfahren mit Hilfe von Drei-Wege-Katalysatoren gereinigt. Diese sind in der Lage, die drei wesentlichen gasförmigen Schadstoffe des Motors, nämlich Kohlenwasserstoffe, Kohlenmonoxid und Stickoxide, gleichzeitig zu unschädlichen Komponenten umzusetzen. Stöchiometrisch heißt, dass im Mittel genau so viel Luft zur Verbrennung des im Zylinder vorhandenen Kraftstoffs zur Verfügung steht, wie für eine vollständige Verbrennung benötigt wird. Das Verbrennungsluftverhältnis $\lambda$ (A/F-Verhältnis; Luft/Kraftstoffverhältnis) setzt die tatsächlich für eine Verbrennung zur Verfügung stehende Luftmasse $m_{L,tats}$ ins Verhältnis zur stöchiometrischen Luftmasse $m_{L,st}$:

$$\lambda = \frac{m_{L,tats}}{m_{L,st}}$$

Ist $\lambda < 1$ (z. B. 0,9) bedeutet dies "Luftmangel", man spricht von einem fetten Abgasgemisch, $\lambda > 1$ (z. B. 1,1) bedeutet "Luftüberschuss" und das Abgasgemisch wird als mager bezeichnet. Die Aussage $\lambda = 1,1$ bedeutet, dass 10% mehr Luft vorhanden ist, als zur stöchiometrischen Reaktion notwendig wäre.

Neben den gasförmigen Schadstoffen enthält das Abgas von Verbrennungsmotoren aber auch feinste Partikel (PM), die aus der unvollständigen Verbrennung des Kraftstoffs resultieren und im Wesentlichen aus Ruß bestehen. Im Unterschied zur Partikelemission von Dieselmotoren sind die Partikel im Abgas stöchiometrisch betriebener Verbrennungsmotoren, wie Ottomotoren, sehr klein und weisen eine durchschnittliche Partikelgröße kleiner 1 $\mu$m auf. Typische Partikelgrößen liegen im Bereich von 10 nm bis 200 nm. Des Weiteren ist die emittierte Partikelmenge sehr gering und bewegt sich im Bereich von 2 mg/km bis 4 mg/km.

Mit der europäischen Abgasnorm Euro 6c ist eine Umstellung des Grenzwertes für solche Partikel vom Partikelmassengrenzwert auf einen kritischeren Partikelzahlgrenzwert von $6 \times 10^{11}$/km (im Worldwide harmonized Light vehicles Test Cycle - WLTP) verbunden. Damit entsteht Bedarf nach Abgasreinigungskonzepten für stöchiometrisch betriebene Verbrennungsmotoren, die effektiv arbeitende Einrichtungen zur Entfernung von Partikeln umfassen.

Im Bereich der Reinigung von Abgas von mager betriebenen Motoren, also insbesondere von Dieselmotoren, haben sich Wandflussfilter aus keramischen Materialien, wie z.B. Siliciumcarbid, Aluminiumtitanat und Cordierit bewährt. Diese sind aus einer Vielzahl von parallelen Kanälen aufgebaut, die durch poröse Wände gebildet werden. Die Kanäle sind wechselseitig an einem der beiden Enden des Filters verschlossen, so dass Kanäle A gebildet werden, die an der ersten Seite des Filters offen und auf der zweiten Seite des Filters verschlossen sind, sowie Kanäle B, die an der ersten Seite des Filters verschlossen und auf der zweiten Seite des Filters offen sind. Das beispielsweise in die Kanäle A einströmende Abgas kann den Filter nur über die Kanäle B wieder verlassen, und muss zu diesem Zweck durch die porösen Wände zwischen den Kanälen A und B durchfließen. Beim Durchtritt des Abgases durch die Wand werden die Partikel zurückgehalten und das Abgas gereinigt.

Die so zurückgehaltenen Partikel müssen nachfolgend abgebrannt bzw. oxidiert werden, um ein Verstopfen des Filters bzw. einen inakzeptablen Anstieg des Gegendrucks des Abgassystems zu verhindern. Zu diesem Zweck wird beispielsweise das Wandflussfilter mit katalytisch aktiven Beschichtungen versehen, die die Zündtemperatur von Ruß herabsetzen.

Es ist bereits bekannt, solche Beschichtungen auf die porösen Wände zwischen den Kanälen aufzubringen (sogenannte auf-Wand-Beschichtung) oder in die porösen Wände einzubringen (sogenannte in-Wand-Beschichtung). Die EP 1657410 A2 beschreibt auch bereits eine Kombination beider Beschichtungsarten, d. h. ein Teil des katalytisch aktiven Materials liegt in den porösen Wänden und ein anderer Teil auf den porösen Wänden vor.

Das Konzept, Partikel mittels Wandflussfiltern aus dem Abgas zu entfernen, ist bereits auf die Reinigung von Abgas von mit stöchiometrischem Luft/Kraftstoff-Gemisch betriebenen Verbrennungsmotoren übertragen worden, siehe zum Beispiel die EP 2042226 A2. Gemäß deren Lehre trägt ein Wandflussfilter zwei übereinander angeordnete Schichten, wobei eine in der porösen Wand und die andere auf der porösen Wand angeordnet sein kann.

Ein ähnliches Konzept verfolgt die DE 102011050788 A1. Dort enthalten die porösen Filterwände ein Katalysatormaterial eines Drei-Wege-Katalysators, während zusätzlich ein Katalysatormaterial eines Drei-Wege-Katalysators auf Teilbereiche der Filterwände aufgebracht ist.

FR 3020091 A1 offenbart ein Partikelfilter, das eine Beschichtung in den porösen Wänden, sowie Beschichtungen auf den Oberflächen der Eingangs- und Ausgangskanäle trägt. Letztere erstrecken sich auf einem Teilbereich der Filterlänge und zwar sowohl auf den Eingangs- wie auf den Ausgangsoberflächen auf der Seite des Filters, an der das Abgas eintritt. Weitere Dokumente, die mit katalytisch aktiven Beschichtungen versehene Filtersubstrate beschreiben, sind EP 3205388 A1, EP 3207977 A1, EP 3207978 A1, EP 3207987 A1, EP 3207989 A1, EP 3207990 A1 und EP 3162428 A1.

Die Dokumente EP 2322773 A1, EP 2650042 A1 und WO 2017/109514 A1 offenbaren Partikelfilter für stöchiometrisch betriebene Verbrennungsmotoren, die mehrere Cer/Zirkonium-Mischoxide enthalten die mit Seltenerdmetallen dotiert sein können.

Es besteht weiter Bedarf nach katalytisch aktiven Partikelfiltern, die die Funktionalitäten eines Partikelfilters und eines Dreiwegekatalysators vereinen und dabei die künftig geltenden Grenzwerte einzuhalten erlauben. Dabei soll das Partikelfilter einen möglichst hohen Umsetzungsgrad für die gasförmigen Schadstoffe und Partikel aufweisen, insbesondere auch nach einer Alterung, die einer Belastung gemäß der gesetzlichen Dauerlaufanforderungen entspricht. Zugleich sollte das Filter einen möglichst niedrigen Staudruck aufweisen, damit die Motorleistung erhalten bleibt und ein möglichst niedriger Kraftstoffverbrauch verwirklicht werden kann.

Die vorliegende Erfindung betrifft ein Partikelfilter zur Entfernung von Partikeln, Kohlenmonoxid, Kohlenwasserstoffen und Stickoxiden aus dem Abgas von mit stöchiometrischem Luft/Kraftstoffgemisch betriebenen Verbrennungsmotoren, das ein Wandflussfilter der Länge L und eine Beschichtung Z umfasst, wobei das Wandflussfilter Kanäle E und A umfasst, die sich parallel zwischen einem ersten und einem zweiten Ende des Wandflussfilters erstrecken und die durch poröse Wände getrennt sind, die Oberflächen $O_E$ bzw. $O_A$ bilden und wobei die Kanäle E am zweiten Ende und die Kanäle A am ersten Ende verschlossen sind, dadurch gekennzeichnet, dass sich Beschichtung Z in den porösen Wänden befindet und sich ausgehend vom ersten Ende des Wandflussfilters über die Länge L erstreckt und aktives Aluminiumoxid, mindestens, vorzugsweise zwei voneinander verschiedene Cer/Zirkonium/Seltenerdmetall-Mischoxide und mindestens ein Platingruppenmetall aufweist und das erste Cer/Zirkonium/Seltenerdmetall-Mischoxid zusätzlich zu Lanthanoxid mit Yttriumoxid dotiert ist.

Die Beschichtung Z ist katalytisch aktiv, insbesondere bei Betriebstemperaturen von 250 °C bis 1100 °C. Sie enthält ein oder mehrere Platingruppenmetalle, die auf einem oder mehreren Trägermaterialien fixiert sind, sowie zwei voneinander verschiedene Sauerstoffspeicherkomponenten. Die Sauerstoffspeicherkomponenten unterscheiden sich hinsichtlich mindestens einer der enthaltenen Komponenten. Gleiche Bestandteile der Sauerstoffspeichermaterialien können in gleichen oder verschiedenen Mengen enthalten sein.

Als Sauerstoffspeicherkomponenten kommen Cer/Zirkonium/ Seltenerdmetall-Mischoxide in Frage. Der Begriff "Cer/Zirkonium/ Seltenerdmetall-Mischoxid" im Sinne vorliegender Erfindung schließt physikalische Mischungen aus Ceroxid, Zirkoniumoxid und Seltenerdoxid aus. Vielmehr sind "Cer/Zirkonium/Seltenerdmetall-Mischoxide" durch eine weitgehend homogene, dreidimensionale Kristallstruktur gekennzeichnet, die idealerweise frei ist von Phasen aus reinem Ceroxid, Zirkoniumoxid bzw. Seltenerdoxid. Je nach Herstellungsverfahren können aber auch nicht vollständig homogene Produkte entstehen, die in der Regel ohne Nachteil verwendet werden können.

Im Übrigen umfasst der Begriff Seltenerdmetall bzw. Seltenerdmetalloxid im Sinne vorliegender Erfindung kein Cer bzw. kein Ceroxid.

Als Seltenerdmetalloxide in den Cer/Zirkonium/Seltenerdmetall-Mischoxiden kommen beispielsweise Lanthanoxid, Yttriumoxid, Praseodymoxid, Neodymoxid und/oder Samariumoxid in Betracht.

Bevorzugt sind Lanthanoxid, Yttriumoxid und/oder Praseodymoxid. Überraschenderweise hat sich gezeigt, dass eine Kombination unterschiedlicher Cer/Zirkonium/Seltenerdmetall-Mischoxide eine stark verbesserte Umsetzung gasförmiger Schadstoffe nach harter Alterung bewirken kann. Besonders bevorzugt als Seltenerdmetalle sind in diesem Zusammenhang Lanthanoxid und/oder Yttriumoxid und ganz besonders bevorzugt sind Lanthanoxid und Yttriumoxid, Yttriumoxid und Praseodymoxid, sowie Lanthanoxid und Praseodymoxid.

In Ausführungsformen der vorliegenden Erfindung sind die Sauerstoffspeicherkomponenten frei von Neodymoxid.

In Ausführungsformen der vorliegenden Erfindung liegt in Beschichtung Z das Gewichtsverhältnis von Aluminiumoxid zur Summe der beiden Cer/Zirkonium/Seltenerdmetall-Mischoxide im Bereich von 10:90 bis 60:40 liegt, vorzugsweise im Bereich von 20:80 bis 50:50 und besonders bevorzugt im Bereich von 25:75 bis 35:65. Die Beschichtung Z umfasst in bevorzugten Ausführungsformen jeweils Lanthan-stabilisiertes Aluminiumoxid in Mengen von 10 bis 60 Gew.-%, bevorzugt 20 bis 50, besonders bevorzugt 25 bis 35 Gew.-%, sowie Sauerstoffspeicherkomponenten in Mengen von 40 bis 90 Gew.-%, bevorzugt 50 bis 80 Gew.-%, besonders bevorzugt 65 bis 75 Gew.-%, jeweils bezogen auf die Summe der Gewichte von Aluminiumoxid und Sauerstoffspeicherkomponenten in der Beschichtung Z.

Die Beschichtung Z umfasst zwei voneinander verschiedene Sauerstoffspeicherkomponenten, wobei das Gewichtsverhältnis vom ersten Cer/Zirkonium/Seltenerdmetall-Mischoxid zum zweiten Cer/Zirkonium/Seltenerdmetall-Mischoxid im Bereich von 4:1 bis 1:4 liegen kann und vorzugsweise im Bereich von 3:1 bis 1:3 und besonders bevorzugt im Bereich von 2:1 bis 1:2 liegt.

In Ausführungsformen der vorliegenden Erfindung umfasst Beschichtung Z eine erste und eine zweite Sauerstoffspeicherkomponente, wobei die erste Sauerstoffspeicherkomponente einen höheren Gehalt an Zirkoniumoxid aufweist als die zweite Sauerstoffspeicherkomponente.

Erfindungsgemäß kann das Masseverhältnis von Ceroxid zu Zirkoniumoxid in den Cer/Zirkonium/Seltenerd metall-Mischoxiden in weiten Grenzen variieren. Es beträgt beispielsweise 0,1 bis 1,5, bevorzugt 0,2 bis 1,25 oder 0,3 bis 1. Weiterhin ist bevorzugt, wenn die erste Sauerstoffspeicherkomponente ein Gewichtsverhältnis von Ceroxid zu Zirkoniumoxid von 0,7 bis 0,1 aufweist, welches kleiner ist als im zweiten Cer/Zirkonium/Seltenerdmetall-Mischoxid, das ein Gewichtsverhältnis von Ceroxid zu Zirkoniumoxid von 0,5 bis 1,5 aufweist. Weitere mehr bevorzugte Ausführungs formen enthalten eine erste Sauerstoffspeicherkomponente mit einem Gewichtsverhältnis von Ceroxid zu Zirkoniumoxid von 0,6 bis 0,2 und eine zweite Sauerstoffspeicherkomponente mit einem Gewichtsverhältnis von Ceroxid zu Zirkon iumoxid von 0,6 bis 1,2. Wieder andere ganz bevorzugte Ausführungsformen enthalten eine erste Sauerstoffspeicher komponente mit einem Gewichtsverhältnis von Ceroxid zu Zirkoniumoxid von 0,5 bis 0,3 und die zweite Sauerstoffspei cherkomponente weist ein Gewichtsverhältnis von Ceroxid zu Zirkoniumoxid von 0,7 bis 1,0 auf.

In einer bevorzugten Ausführungsform ist das erfindungsgemäße Partikelfilter so ausgestaltet, dass das erste Cer/Zirkonium/Seltenerdmetall-Mischoxid einen Ceroxid-Gehalt von 10 % bis 40 % bezogen auf das Gewicht des ersten Cer/Zirkonium/Seltenerdmetall-Mischoxids, mehr bevorzugt von 15 % bis 35 % und ganz besonders bevorzugt von 20 % bis 30 % bezogen auf das Gewicht des ersten Cer/Zirkonium/Seltenerdmetall-Mischoxids aufweist.

Demgegenüber liegt der Zirkoniumoxid-Gehalt im ersten Cer/Zirkonium/Seltenerdmetall-Mischoxid bei 40 % bis 90 % bezogen auf das Gewicht des ersten Cer/Zirkonium/Seltenerdmetall-Mischoxids. Vorteilhaft ist, wenn der Zirkoniumoxid-Gehalt im ersten Cer/Zirkonium/Seltenerdmetall-Mischoxid zwischen 50 % bis 75 %, ganz bei 55 % bis 65 % bezogen auf das Gewicht des ersten Cer/Zirkonium/Seltenerdmetall-Mischoxids liegt.

Gleichfalls sollte im zweiten Cer/Zirkonium/Seltenerdmetall-Mischoxid einen Ceroxid-Gehalt von 25 % bis 60 % bezogen auf das Gewicht des zweiten Cer/Zirkonium/Seltenerdmetall-Mischoxids vorherrschen. Vorteilhafter ist, wenn im zweiten Cer/Zirkonium/Seltenerdmetall-Mischoxid einen Ceroxid-Gehalt von 30 % bis 55 %, ganz bevorzugt von 35 % bis 50 % bezogen auf das Gewicht des zweiten Cer/Zirkonium/Seltenerdmetall-Mischoxids gegeben ist.

In einer weiteren bevorzugten Ausführungsform weist das zweite Cer/Zirkonium/Seltenerdmetall-Mischoxid einen Zirkoniumoxid-Gehalt von 20 % bis 70 % bezogen auf das Gewicht des zweiten Cer/Zirkonium/Seltenerdmetall-Mischoxids auf. Hier ist mehr bevorzugt, wenn das zweite Cer/Zirkonium/Seltenerdmetall-Mischoxid einen Zirkoniumoxid-Gehalt von 30 % bis 60 % und ganz besonders bevorzugt von 40 % bis 55 % bezogen auf das Gewicht des zweiten Cer/Zirkonium/Seltenerdmetall-Mischoxids aufweist.

Erfindungsgemäß bevorzugt ist, wenn beide Cer/Zirkonium/Seltenerdmetall-Mischoxide mit Lanthanoxid dotiert sind, so dass bevorzugt der Gehalt an Lanthanoxid >0 % bis 10 % bezogen auf das Gewicht des Cer/Zirkonium/Selten erdmetall-Mischoxids beträgt. Diese Lanthanoxid enthaltende Sauerstoffspeicherkomponenten weisen besonders vor teilhafter Weise ein Masseverhältnis von Lanthanoxid zu Ceroxid von 0,05 bis 0,5 auf. In Ausführungsformen der vor liegenden Erfindung umfasst Beschichtung Z Lanthan-stabilisiertes Aluminiumoxid, sowie Rhodium, Palladium oder Palladium und Rhodium und zwei verschiedene, Zirkoniumoxid, Ceroxid, Lanthanoxid, sowie Yttriumoxid oder Praseo dymoxid umfassende Sauerstoffspeicherkomponenten.

Das erste Cer/Zirkonium/Seltenerdmetall-Mischoxid ist zusätzlich zu Lanthanoxid mit Yttriumoxid dotiert. Ein bevorzugtes Partikelfilter besitzt einen Yttriumoxidgehalt im ersten Cer/Zirkonium/Seltenerdmetall-Mischoxids von 2 % bis 25 % bezogen auf das Gewicht des ersten Cer/Zirkonium/Seltenerdmetall-Mischoxids. Mehr bevorzugt liegt der Yttriumoxidgehalt des ersten Cer/Zirkonium/Seltenerdmetall-Mischoxids zwischen 4 % bis 20 %, ganz bevorzugt bei 10 % bis 15 % bezogen auf das Gewicht des ersten Cer/Zirkonium/Seltenerdmetall-Mischoxids.

Vorteilhaft ist eine Ausführungsform, in der das zweite Cer/Zirkonium/Seltenerdmetall-Mischoxid neben Lan thanoxid mit einem weiteren Metalloxid aus der Gruppe der Seltenerdmetalloxide dotiert ist, bevorzugt mit Praseodym.

In Ausführungsformen der vorliegenden Erfindung ist in Beschichtung Z der Zirkoniumoxidgehalt der yttrium oxidhaltigen Sauerstoffspeicherkomponente größer als der Zirkoniumoxid-Gehalt der praseodymoxidhaltigen Sauer stoffspeicherkomponente, jeweils bezogen auf die jeweilige Sauerstoffspeicherkomponente.

Der Gehalt des zweiten Seltenerdmetalls des zweiten Cer/Zirkonium/Seltenerdmetall-Mischoxids kann zwi schen zwischen 2 % bis 15 % bezogen auf das Gewicht des zweiten Cer/Zirkonium/Seltenerdmetall-Mischoxids liegen. Vorteilhafter ist, wenn der Gehalt des zweiten Seltenerdmetalls des zweiten Cer/Zirkonium/Seltenerdmetall-Mischoxids bei 3 % bis 10 %, ganz bevorzugt bei 4 % bis 8 % bezogen auf das Gewicht des zweiten Cer/Zirkonium/Seltenerdmetall- Mischoxids liegt.

In Beschichtung Z ist dabei der Yttriumoxid-Gehalt der ersten Sauerstoffspeicherkomponente insbesondere 5 bis 15 Gew.-%, bezogen auf das Gewicht der Sauerstoffspeicherkomponente. Das Gewichtsverhältnis von Lanthanoxid zu Yttriumoxid beträgt insbesondere 0.1 bis 1, vorzugsweise 0.15 bis 0.8 und ganz bevorzugt 0.2 bis 0.5.

In Beschichtung Z ist dabei der Praseodym-Gehalt der zweiten Sauerstoffspeicherkomponente insbesondere 2 bis 10 Gew.-%, bezogen auf das Gewicht der Sauerstoffspeicherkomponente. Das Gewichtsverhältnis von Lanthanoxid zu Praseodymoxid beträgt insbesondere 0,1 bis 2,0 vorzugsweise 0,2 bis 1,8 und ganz bevorzugt 0,5 bis 1,5.

Die Beschichtung Z enthält als katalytisch aktive Elemente Platingruppenmetall. Hierfür kommen insbesondere Platin, Palladium und Rhodium oder Mischungen derselben in Frage, wobei Palladium, Rhodium, Palladium und Rhodium, oder Platin, Palladium und Rhodium bevorzugt und Palladium und Rhodium besonders bevorzugt sind. Des Weiteren können beide Cer/Zirkonium/Seltenerdmetall-Mischoxide mit Palladium und Rhodium, Platin und Rhodium oder Platin, Palladium und Rhodium aktiviert sein.

Die katalytisch aktive Beschichtung befindet sich in den Poren der porösen Wand eines Wandflussfilters. Nur geringe Teile können durch den Beschichtungsprozess bedingt auf der Wand vorliegen. Erfindungsgemäß ist die Beschichtung Z zu > 95% in den Poren der Wand vorhanden.

Die Edelmetalle werden üblicherweise in Mengen von 0,15 g/l bis 5 g/l, bezogen auf das Volumen des Wandflussfilters, eingesetzt. In einer bevorzugten Ausführungsform liegen die Edelmetalle sowohl auf dem Aluminiumoxid als auch auf den Sauerstoffspeicherkomponenten gleichermaßen vor.

Als Trägermaterialien für die Edelmetalle kommen alle dem Fachmann für diesen Zweck geläufigen Materialien in Betracht. Solche Materialien sind insbesondere Metalloxide mit einer BET-Oberfläche von 30 bis 250 m$^2$/g, bevorzugt von 100 bis 200 m$^2$/g (bestimmt nach DIN 66132 - neueste Fassung am Anmeldetag).

Besonders geeignete Trägermaterialien für die Edelmetalle sind ausgewählt aus der Reihe bestehend aus Aluminiumoxid, dotiertes Aluminiumoxid, Siliziumoxid, Titandioxid und Mischoxiden aus einem oder mehreren davon. Dotierte Aluminiumoxide sind beispielsweise mit Lanthanoxid-, Bariumoxid-, Zirkoniumoxid- und/oder Titanoxid-dotierte Aluminiumoxide. Mit Vorteil wird Lanthan-stabilisiertes Aluminiumoxid eingesetzt, wobei Lanthan in Mengen von 1 bis 10 Gew.-%, bevorzugt 3 bis 6 Gew.-%, jeweils berechnet als La$_2$O$_3$ und bezogen auf das Gewicht des stabilisierten Aluminiumoxides, verwendet wird.

Üblicherweise enthält die Beschichtung Z Sauerstoffspeicherkomponenten in Mengen von 15 bis 120 g/l, bezogen auf das Volumen des Wandflussfilters.

Das Masseverhältnis von Trägermaterialien und Sauerstoffspeicherkomponenten in Beschichtung Z beträgt üblicherweise 0,2 bis 1,5, beispielsweise 0,3 bis 0,8.

In Ausführungsformen der vorliegenden Erfindung enthält Beschichtung Z eine oder mehrere Erdalkaliverbindungen wie z. B. Strontiumoxid, Bariumoxid oder Bariumsulfat. Die Menge an Bariumsulfat je Beschichtung beträgt insbesondere 2 bis 20 g/l Volumen des Wandflussfilters. Insbesondere enthält Beschichtung Z Strontiumoxid oder Bariumoxid.

In weiteren Ausführungsformen der vorliegenden Erfindung enthält Beschichtung Z Additive wie Seltenerdverbindungen wie z. B. Lanthanoxid und/oder Binder, wie z. B. Aluminiumverbindungen. Diese Additive werden in Mengen verwendet, die in weiten Grenzen variieren können und die der Fachmann im konkreten Fall mit einfachen Mitteln bestimmen kann.

Gemäß der vorliegenden Erfindung erstreckt sich die Beschichtung Z ausgehend vom ersten Ende des Wandflussfilters über die gesamte Länge L des Wandflussfilters. Die Beladung des Wandflussfilters mit Beschichtung Z beträgt bevorzugt 20 bis 125 g/l, bezogen auf das Volumen des Wandflussfilters.

In Ausführungsformen der vorliegenden Erfindung enthält Beschichtung Z keinen Zeolithen oder kein Molsieb.

Wandflussfilter, die gemäß vorliegender Erfindung verwendet werden können, sind bekannt und am Markt erhältlich. Sie bestehen beispielsweise aus Siliciumcarbid, Aluminiumtitanat oder Cordierit, haben beispielsweise eine Zelligkeit von 200 bis 400 Zellen pro Quadratzoll (cpsi), d. h. etwa 30 bis 60 Zellen pro cm$^2$, und üblicherweise eine Wandstärke zwischen 6 und 12 mil, bzw. 0,1524 und 0,305 mm.

Sie weisen in unbeschichtetem Zustand beispielsweise Porositäten von 50 bis 80 %, insbesondere 55 bis 75% auf. Ihre durchschnittliche Porengröße beträgt in unbeschichtetem Zustand beispielsweise 10 bis 25 Mikrometer. In der Regel sind die Poren des Wandflussfilters sogenannte offene Poren, das heißt sie haben eine Verbindung zur den Kanälen. Des Weiteren sind die Poren in der Regel untereinander verbunden. Dies ermöglicht einerseits die leichte Beschichtung der inneren Porenoberflächen und andererseits eine leichte Passage des Abgases durch die porösen Wände des Wandflussfilters.

Die Herstellung des erfindungsgemäßen Partikelfilters kann nach dem Fachmann geläufigen Methoden erfolgen, so etwa dadurch, dass eine Beschichtungssuspension, die üblicherweise Washcoat genannt wird, mittels eines der üblichen Tauchbeschichtungsverfahren bzw. Pump- und Saug-Beschichtungsverfahren auf das Wandflussfilter aufgebracht wird. Thermische Nachbehandlung bzw. Kalzination schließen sich üblicherweise an.

Dem Fachmann ist bekannt, dass die durchschnittliche Porengröße des Wandflussfilters und die mittlere Teilchengröße der katalytisch aktiven Materialien aufeinander abgestimmt werden müssen, um eine auf-Wand-Beschichtung oder eine in-Wand-Beschichtung zu erzielen. In Fall der in-Wand-Beschichtung muss die mittlere Teilchengröße der katalytisch aktiven Materialien klein genug sein, um in die Poren des Wandflussfilters einzudringen. Dagegen muss im Fall der auf-Wand-Beschichtung die mittlere Teilchengröße der katalytisch aktiven Materialien groß genug sein, um nicht in die Poren des Wandflussfilters einzudringen.

In Ausführungsformen der vorliegenden Erfindung werden die Beschichtungssuspensionen zur Herstellung der Beschichtungen Z bis zu einer Partikelgrößenverteilung von d$_{50}$ = 1 bis 2 $\mu$m und d$_{99}$ = 6 bis 7 $\mu$m gemahlen.

Das erfindungsgemäße Partikelfilter eignet sich hervorragend zur Entfernung von Partikeln, Kohlenmonoxid, Kohlenwasserstoffen und Stickoxiden aus dem Abgas von mit stöchiometrischem Luft/KraftstoffGemisch betriebenen Verbrennungsmotoren.

Die vorliegende Erfindung betrifft somit auch ein Verfahren zur Entfernung von Partikeln, Kohlenmonoxid, Kohlenwasserstoffen und Stickoxiden aus dem Abgas von mit stöchiometrischem Luft/Kraftstoff-Gemisch betriebenen Verbrennungsmotoren, das dadurch gekennzeichnet ist, dass das Abgas über ein erfindungsgemäßes Partikelfilter geleitet wird.

Dabei kann das Abgas so über ein erfindungsgemäßes Partikelfilter geleitet werden, dass es durch die Kanäle E in das Partikelfilter eintritt und es durch Kanäle A wieder verlässt.

Es ist aber auch möglich, dass das Abgas durch die Kanäle A in das Partikelfilter eintritt und es durch Kanäle E wieder verlässt.

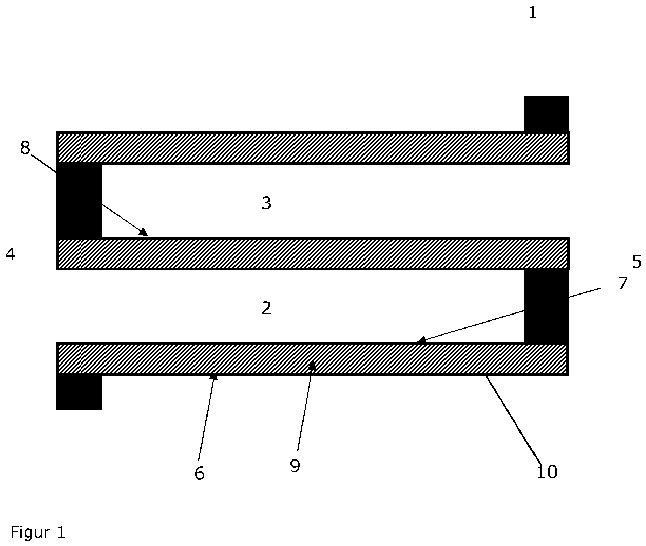

Figur 1 zeigt ein erfindungsgemäßes Partikelfilter, das ein Wandflussfilter der Länge L (1) mit Kanälen E (2) und Kanälen A (3) umfasst, die sich parallel zwischen einem ersten Ende (4) und einem zweiten Ende (5) des Wandflussfilters erstrecken und die durch poröse Wände (6) getrennt sind, die Oberflächen $O_E$ (7) bzw. Oa, (8) bilden und wobei die Kanäle E (2) am zweiten Ende (5) und die Kanäle A (3) am ersten Ende (4) verschlossen sind. Beschichtung Z (9) befindet sich in den porösen Wänden (6).

Die Erfindung wird in den nachstehenden Beispielen näher erläutert.

Beispiele:

Jeweils vier Filter wurden mit verschiedenen katalytisch aktiven Beschichtungen versehen. Als Filtersubstrate wurden jeweils keramische Wandflussfilter aus hochporösem Cordierit mit einem Durchmesser von 11,84 cm und einer Länge von 15,24 cm sowie einer Zelligkeit von 300 cpsi (46,5 Zellen pro $cm^2$) und einer Wandstärke von 8,5 mil, also 0,02 mm verwendet. Jedes Filter wurde mit einer Beschichtung von 76,27 g/l bezogen auf das Filtervolumen versehen.

Vergleichsbeispiel 1:

Mit Lanthanoxid stabilisiertes Aluminiumoxid wurde zusammen mit einer Sauerstoffspeicherkomponente, die 40 Gew.-% Ceroxid, 50 Gew.-% Zirkoniumoxid, 5 Gew.-% Lanthanoxid und 5 Gew.-% Praseodymoxid umfasste, in Wasser suspendiert. Das Gewichtsverhältnis von Aluminiumoxid zu Sauerstoffspeicherkomponente betrug 30:70. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung eines handelsüblichen Wandflussfiltersubstrats eingesetzt, wobei die Beschichtung über 100% der Substratlänge in die poröse Filterwand eingebracht wurde. Die Gesamtbeladung dieses Filters betrug 76,27 g/l, die Edelmetallbeladung 1,271 g/l mit einem Verhältnis von Palladium zu Rhodium von 5 : 1. Das so erhaltene beschichtete Filter wurde getrocknet und anschließend kalziniert.

Vergleichsbeispiel 2:

Mit Lanthanoxid stabilisiertes Aluminiumoxid wurde zusammen mit einer Sauerstoffspeicherkomponente, die 24 Gew.-% Ceroxid, 60 Gew.-% Zirkoniumoxid, 3,5 Gew.-% Lanthanoxid und 12,5 Gew.-% Yttriumoxid umfasste, in Wasser suspendiert. Das Gewichtsverhältnis von Aluminiumoxid zu Sauerstoffspeicherkomponente betrug 30:70. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung eines handelsüblichen Wandflussfiltersubstrats eingesetzt, wobei die Beschichtung über 100% der Substratlänge in die poröse Filterwand eingebracht wurde. Die Gesamtbeladung dieses Filters betrug 76,27 g/l, die Edelmetallbeladung 1,271 g/l mit einem Verhältnis von Palladium zu Rhodium von 5 : 1. Das so erhaltene beschichtete Filter wurde getrocknet und anschließend kalziniert.

Erfindungsgemäßes Beispiel 1:

Mit Lanthanoxid stabilisiertes Aluminiumoxid wurde zusammen mit einer ersten Sauerstoffspeicherkomponente, die 40 Gew.-% Ceroxid, 50 Gew.-% Zirkoniumoxid, 5 Gew.-% Lanthanoxid und 5 Gew.-% Praseodymoxid umfasste, und einer zweiten Sauerstoffspeicherkomponente, die 24 Gew.-% Ceroxid, 60 Gew.-% Zirkoniumoxid, 3,5 Gew.-% Lanthanoxid und 12,5 Gew.-% Yttriumoxid umfasste, in Wasser suspendiert. Beide Sauerstoffspeicherkomponenten wurden zu gleichen Teilen eingesetzt. Das Gewichtsverhältnis von Aluminiumoxid zu Sauerstoffspeicherkomponenten betrug 30:70. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung eines handelsüblichen Wandflussfiltersubstrats eingesetzt, wobei die Beschichtung über 100% der Substratlänge in die poröse Filterwand eingebracht wurde. Die Gesamtbeladung dieses Filters betrug 76,27 g/l, die Edelmetallbeladung 1,271 g/l mit einem Verhältnis von Palladium zu Rhodium von 5 : 1. Das so erhaltene beschichtete Filter wurde getrocknet und anschließend kalziniert.

Staudruck:

|  | 600 m$^3$/h | 900 m$^3$/h |
|---|---|---|
| Vergleichsbeispiel 1 | 52,9 mbar $\pm$ 0,2 mbar | 107,4 mbar $\pm$ 0,3 mbar |
| Vergleichsbeispiel 2 | 53,3 mbar $\pm$ 0,4 mbar | 107,2 mbar $\pm$ 0,5 mbar |
| Beispiel 1 | 53,0 mbar $\pm$ 0,6 mbar | 105,9 mbar $\pm$ 0,6 mbar |

Zur Bestimmung der katalytischen Eigenschaften des erfindungsgemäßen Filters wurden jeweils ein Filter von Vergleichsbeispiel 1, Vergleichsbeispiel 2 und Beispiel 1 in einer Motorprüfstandsalterung gealtert. Die Alterung besteht aus einer Schubabschaltungsalterung mit 950°C Abgastemperatur vor Katalysatoreingang (Maximale Betttemperatur 1030°C). Die Alterungszeit betrug 19 Stunden.

Anschließend wurden an einem Motorprüfstand das Anspringverhalten bei konstanter mittlerer Luftzahl $\lambda$ und die dynamische Umsetzung bei Änderung von $\lambda$ geprüft.

Tabelle 1 enthält die Temperaturen $T_{50}$, bei denen jeweils 50% der betrachteten Komponente umgesetzt werden. Dabei wurde das Anspringverhalten bei stöchiometrischer Abgaszusammensetzung ($\lambda$ = 0,999 mit $\pm$3,4% Amplitude) bestimmt.

Tabelle 1: Ergebnisse des Anspringverhaltens nach Alterung für Beispiel 1 und Vergleichsbeispiele 1 und 2

|  | $T_{50}$ HC stöch | $T_{50}$ CO stöch | $T_{50}$ NOx stöch |
|---|---|---|---|
| Vergleichsbeispiel 1 | 391 | 399 | 406 |
| Vergleichsbeispiel 2 | 370 | 377 | 377 |
| Beispiel 1 | 374 | 379 | 379 |

Das dynamische Umsatzverhalten wurde in einem Bereich für $\lambda$ von 0,99 bis 1,01 bei einer konstanten Temperatur von 510°C bestimmt. Die Amplitude von $\lambda$ betrug dabei $\pm$6,8%. Tabelle 2 enthält den Umsatz am Schnittpunkt der CO- und der NOx-Umsatzkurven, sowie den zugehörigen HC-Umsatz.

Tabelle 2: Ergebnisse des dynamischen Umsatzverhaltens nach Alterung für Beispiel 1 und Vergleichsbeispiele 1 und 2

|  | CO/NOx Umsatz am Kreuzungspunkt | HC Umsatz am $\lambda$ des CO/NOx-Kreuzungspunkts |
|---|---|---|
| Vergleichsbeispiel 1 | 82% | 96% |
| Vergleichsbeispiel 2 | 81,5% | 97% |
| Beispiel 1 | 90% | 97% |

Das erfindungsgemäße Beispiel 1 zeigt eine deutliche Verbesserung beim dynamischen CO/NOx-Umsatz nach Alterung, während das Anspringverhalten ähnlich gut ist wie bei Vergleichsbeispiel 2, aber besser als bei Vergleichsbeispiel 1.

OSC-Eigenschaften:

Die Sauerstoffspeicherfähigkeit wurde in zwei unterschiedlichen Versuchen bestimmt. Tabelle 3 zeigt die Werte für den Lambda-Sprungtest, der die statische Sauerstoffspeicherfähigkeit charakterisiert. Dabei wird das Luft-Kraftstoff-Verhältnis $\lambda$ vor dem Filter von fett ($\lambda$ = 0,96) nach mager ($\lambda$ = 1,04) geändert. Aus der Verzugszeit der Nachkat-Lambdasonde gegenüber der Vorkat-Lambdasonde wird die gespeicherte Sauerstoffmenge berechnet.

Tabelle 3: Statische Sauerstoffspeicherfähigkeit nach Alterung für Beispiel 1 und Vergleichsbeispiele 1 und 2

| | Sauerstoffspeicherfähigkeit (mg/l) |
|---|---|
| Vergleichsbeispiel 1 | 182 |
| Vergleichsbeispiel 2 | 132 |
| Beispiel 1 | 194 |

In einem anderen Versuch wird die dynamische Sauerstoffspeicherfähigkeit ermittelt. Dabei wird bei einem Mittelwert von $\lambda$ =1 das Abgas mit verschiedenen $\lambda$ Amplituden mit einer Frequenz von 1 Hz beaufschlagt. Das Amplitudensignal der Nachkat-Lambdasonde wird durch das Amplitudensignal der Vorkat-Lambdasonde geteilt. Je kleiner der Wert, desto besser die dynamische Sauerstoffspeicherfähigkeit. Die Ergebnisse sind in Tabelle 4 gezeigt.

Tabelle 4: Dynamische Sauerstoffspeicherfähigkeit nach Alterung für Beispiel 1 und Vergleichsbeispiele 1 und 2

| | 2% Amplitude | 3,4% Amplitude | 6,8% Amplitude |
|---|---|---|---|
| Vergleichsbeispiel 1 | 0,24 | 0,37 | 0,41 |
| Vergleichsbeispiel 2 | 0,08 | 0,13 | 0,28 |
| Beispiel 1 | 0,09 | 0,14 | 0,23 |

Das erfindungsgemäße Beispiel zeigt sowohl eine hohe statische als auch eine sehr gute dynamische Sauerstoffspeicherfähigkeit nach Alterung.

**Patentansprüche**

1. Partikelfilter zur Entfernung von Partikeln, Kohlenmonoxid, Kohlenwasserstoffen und Stickoxiden aus dem Abgas von mit stöchiometrischem Luft/Kraftstoffgemisch betriebenen Verbrennungsmotoren, das ein Wandflussfilter der Länge L und eine Beschichtung Z umfasst, wobei das Wandflussfilter Kanäle E und A umfasst, die sich parallel zwischen einem ersten und einem zweiten Ende des Wandflussfilters erstrecken und die durch poröse Wände getrennt sind, die Oberflächen $O_E$ bzw. $O_A$ bilden und wobei die Kanäle E am zweiten Ende und die Kanäle A am ersten Ende verschlossen sind,
**dadurch gekennzeichnet, dass**
sich Beschichtung Z in den porösen Wänden befindet und sich ausgehend vom ersten Ende des Wandflussfilters über die Länge L erstreckt und aktives Aluminiumoxid, mindestens zwei voneinander verschiedene Cer/Zirkonium/Seltenerdmetall-Mischoxide und mindestens ein Platingruppenmetall aufweist und das erste Cer/Zirkonium/Seltenerdmetall-Mischoxid zusätzlich zu Lanthanoxid mit Yttriumoxid dotiert ist.

2. Partikelfilter gemäß Anspruch 1,
**dadurch gekennzeichnet, dass** das Gewichtsverhältnis von Aluminiumoxid zur Summe der beiden Cer/Zirkonium/Seltenerdmetall-Mischoxide im Bereich von 10:90 bis 60:40 liegt.

3. Partikelfilter gemäß Anspruch 1 und/oder 2,
**dadurch gekennzeichnet, dass**
das Gewichtsverhältnis vom ersten Cer/Zirkonium/Seltenerdmetall-Mischoxid zum zweiten Cer/Zirkonium/Seltenerdmetall-Mischoxid im Bereich von 4:1 bis 1:4 liegt.

4. Partikelfilter gemäß einem der vorhergehenden Ansprüche,
**dadurch gekennzeichnet, dass**
das erste Cer/Zirkonium/Seltenerdmetall-Mischoxid einen höheren Zirkoniumoxid-Gehalt aufweist als das zweite Cer/Zirkonium/Seltenerdmetall-Mischoxid.

5. Partikelfilter gemäß einem der vorhergehenden Ansprüche,
**dadurch gekennzeichnet, dass**
das erste Cer/Zirkonium/Seltenerdmetall-Mischoxid ein Gewichtsverhältnis von Ceroxid zu Zirkoniumoxid von 0,7 bis 0,1 aufweist, welches kleiner ist als im zweiten Cer/Zirkonium/Seltenerdmetall-Mischoxid, das ein Gewichtsverhältnis von Ceroxid zu Zirkoniumoxid von 0,5 bis 1,5 aufweist.

6. Partikelfilter gemäß einem der vorhergehenden Ansprüche,
   **dadurch gekennzeichnet, dass**
   das erste Cer/Zirkonium/Seltenerdmetall-Mischoxid einen Ceroxid-Gehalt von 10 % bis 40 % bezogen auf das Gewicht des ersten Cer/Zirkonium/Seltenerdmetall-Mischoxids aufweist.

7. Partikelfilter gemäß einem der vorhergehenden Ansprüche,
   **dadurch gekennzeichnet, dass**
   das erste Cer/Zirkonium/Seltenerdmetall-Mischoxid einen Zirkoniumoxid-Gehalt von 40 % bis 90 % bezogen auf das Gewicht des ersten Cer/Zirkonium/Seltenerdmetall-Mischoxids aufweist.

8. Partikelfilter gemäß einem der vorhergehenden Ansprüche,
   **dadurch gekennzeichnet, dass**
   das zweite Cer/Zirkonium/Seltenerdmetall-Mischoxid einen Ceroxid-Gehalt von 25 % bis 60 % bezogen auf das Gewicht des zweiten Cer/Zirkonium/Seltenerdmetall-Mischoxids aufweist.

9. Partikelfilter gemäß einem der vorhergehenden Ansprüche,
   **dadurch gekennzeichnet, dass**
   das zweite Cer/Zirkonium/Seltenerdmetall-Mischoxid einen Zirkoniumoxid-Gehalt von 20 % bis 70 % bezogen auf das Gewicht des zweiten Cer/Zirkonium/Seltenerdmetall-Mischoxids aufweist.

10. Partikelfilter gemäß einem der vorhergehenden Ansprüche,
    **dadurch gekennzeichnet, dass**
    beide Cer/Zirkonium/Seltenerdmetall-Mischoxide mit Lanthanoxid dotiert sind.

11. Partikelfilter gemäß einem der vorhergehenden Ansprüche,
    **dadurch gekennzeichnet, dass**
    der Gehalt an Lanthanoxid >0 % bis 10 % bezogen auf das Gewicht des jeweiligen Cer/Zirkonium/Seltenerdmetall-Mischoxids beträgt.

12. Partikelfilter gemäß einem der vorhergehenden Ansprüche,
    **dadurch gekennzeichnet, dass**
    der Yttriumoxidgehalt des ersten Cer/Zirkonium/Seltenerdmetall-Mischoxids 2 % bis 25 % bezogen auf das Gewicht des ersten Cer/Zirkonium/Seltenerdmetall-Mischoxids beträgt.

13. Partikelfilter gemäß einem der vorhergehenden Ansprüche,
    **dadurch gekennzeichnet, dass**
    das zweite Cer/Zirkonium/Seltenerdmetall-Mischoxid neben Lanthanoxid mit einem weiteren Metalloxid aus der Gruppe der Seltenerdmetalloxide dotiert ist, bevorzugt mit Praseodym.

14. Partikelfilter gemäß einem der vorhergehenden Ansprüche,
    **dadurch gekennzeichnet, dass**
    der Gehalt des zweiten Seltenerdmetalls des zweiten Cer/Zirkonium/Seltenerdmetall-Mischoxids 2 % bis 15 % bezogen auf das Gewicht des zweiten Cer/Zirkonium/Seltenerdmetall-Mischoxids beträgt.

15. Partikelfilter gemäß einem der vorhergehenden Ansprüche,
    **dadurch gekennzeichnet, dass**
    die katalytisch aktive Beschichtung eines der Platingruppenmetalle Platin, Palladium, Rhodium oder Mischungen derselben enthält.

16. Partikelfilter gemäß einem der vorhergehenden Ansprüche,
    **dadurch gekennzeichnet, dass**
    beide Cer/Zirkonium/Seltenerdmetall-Mischoxide mit Palladium und Rhodium, Platin und Rhodium oder Platin, Palladium und Rhodium aktiviert sind.

17. Verfahren zur Entfernung von Partikeln, Kohlenmonoxid, Kohlenwasserstoffen und Stickoxiden aus dem Abgas von mit stöchiometrischem Luft/Kraftstoff-Gemisch betriebenen Verbrennungsmotoren, das **dadurch gekennzeichnet ist, dass** das Abgas über ein Partikelfilter gemäß den Ansprüchen 1 - 16 geleitet wird.

**Claims**

1. Particulate filter for removing particles, carbon monoxide, hydrocarbons, and nitrogen oxides out of the exhaust gas of combustion engines operated with a stoichiometric air/fuel mixture, comprising a wall flow filter with length L and a coating Z, wherein the wall flow filter includes channels E and A which extend in parallel between a first and a second end of the wall flow filter and are separated by porous walls, which form surfaces $O_E$ or Oa, and wherein the channels E are closed at the second end and the channels A are closed at the first end,
   **characterized in that**
   coating Z is located in the porous walls and extends from the first end of the wall flow filter over the length L, and includes active aluminum oxide, at least two different cerium/zirconium/rare earth metal mixed oxides and at least one platinum group metal, and the first cerium/zirconium/rare earth metal mixed oxide is doped with yttrium oxide in addition to lanthanum oxide.

2. Particulate filter according to claim 1,
   **characterized in that** the weight ratio of aluminum oxide to the sum of the two cerium/zirconium/rare earth metal mixed oxides is in the range from 10:90 to 60:40.

3. Particulate filter according to claim 1 and/or 2,
   **characterized in that**
   the weight ratio of the first cerium/zirconium/rare earth metal mixed oxide to the second cerium/zirconium/rare earth metal mixed oxide is in the range from 4:1 to 1:4.

4. Particulate filter according to one of the preceding claims,
   **characterized in that**
   the first cerium/zirconium/rare earth metal mixed oxide has a higher zirconium oxide content than the second cerium/zirconium/rare earth metal mixed oxide.

5. Particulate filter according to one of the preceding claims,
   **characterized in that**
   the first cerium/zirconium/rare earth metal mixed oxide has a cerium oxide to zirconium oxide weight ratio of 0.7 to 0.1, which is smaller than in the second cerium/zirconium/rare earth metal mixed oxide, which has a cerium oxide to zirconium oxide weight ratio of 0.5 to 1.5.

6. Particulate filter according to one of the preceding claims,
   **characterized in that**
   the first cerium/zirconium/rare earth metal mixed oxide has a cerium oxide content of 10% to 40% based on the weight of the first cerium/zirconium/rare earth metal mixed oxide.

7. Particulate filter according to one of the preceding claims,
   **characterized in that**
   the first cerium/zirconium/rare earth metal mixed oxide has a zirconium oxide content of 40% to 90% based on the weight of the first cerium/zirconium/rare earth metal mixed oxide.

8. Particulate filter according to one of the preceding claims,
   **characterized in that**
   the second cerium/zirconium/rare earth metal mixed oxide has a cerium oxide content of 25% to 60% based on the weight of the second cerium/zirconium/rare earth metal mixed oxide.

9. Particulate filter according to one of the preceding claims,
   **characterized in that**
   the second cerium/zirconium/rare earth metal mixed oxide has a zirconium oxide content of 20% to 70% based on the weight of the second cerium/zirconium/rare earth metal mixed oxide.

10. Particulate filter according to one of the preceding claims,

**characterized in that**
both cerium/zirconium/rare earth metal mixed oxides are doped with lanthanum oxide.

11. Particulate filter according to one of the preceding claims,
    **characterized in that**
    the lanthanum oxide content is >0% to 10% based on the weight of the respective cerium/zirconium/rare earth metal mixed oxide.

12. Particulate filter according to one of the preceding claims,
    **characterized in that**
    the yttrium oxide content of the first cerium/zirconium/rare earth metal mixed oxide is 2% to 25% based on the weight of the first cerium/zirconium/rare earth metal mixed oxide.

13. Particulate filter according to one of the preceding claims,
    **characterized in that**
    the second cerium/zirconium/rare earth metal mixed oxide is doped not only with lanthanum oxide but also with a further metal oxide from the group of rare earth metal oxides, preferably with praseodymium.

14. Particulate filter according to one of the preceding claims,
    **characterized in that**
    the content of the second rare earth metal of the second cerium/zirconium/rare earth metal mixed oxide is 2% to 15% based on the weight of the second cerium/zirconium/rare earth metal mixed oxide.

15. Particulate filter according to one of the preceding claims,
    **characterized in that**
    the catalytically active coating of one of the platinum group metals contains platinum, palladium, rhodium or mixtures thereof.

16. Particulate filter according to one of the preceding claims,
    **characterized in that**
    both cerium/zirconium/rare earth metal mixed oxides are activated with palladium and rhodium, platinum and rhodium or platinum, palladium and rhodium.

17. Method for removing particles, carbon monoxide, hydrocarbons and nitrogen oxides out of the exhaust gas of combustion engines operated with a stoichiometric air/fuel mixture, **characterized in that** the exhaust gas is passed over a particulate filter according to claims 1-16.

**Revendications**

1. Filtre à particules permettant l'élimination de particules, de monoxyde de carbone, d'hydrocarbures et d'oxydes d'azote du gaz d'échappement de moteurs à combustion interne fonctionnant avec un mélange air/carburant stoechiométrique, lequel filtre à particules comprend un filtre à écoulement sur paroi de longueur L et un revêtement Z, dans lequel le filtre à écoulement sur paroi comprend des canaux E et A qui s'étendent parallèlement entre une première et une seconde extrémité du filtre à écoulement sur paroi et qui sont séparés par des parois poreuses, lesquelles forment des surfaces $O_E$ ou $D_A$, et dans lequel les canaux E sont fermés au niveau de la seconde extrémité et les canaux A sont fermés au niveau de la première extrémité,
   **caractérisé en ce que**
   le revêtement Z se trouve dans les parois poreuses et s'étend sur la longueur L à partir de la première extrémité du filtre à écoulement sur paroi et présente de l'oxyde d'aluminium actif, au moins deux oxydes mixtes de cérium/zirconium/métal de terres rares différents l'un de l'autre et au moins un métal du groupe du platine et le premier oxyde mixte de cérium/zirconium/métal de terres rares est dopé avec de l'oxyde d'yttrium en plus d'oxyde de lanthane.

2. Filtre à particules selon la revendication 1,
   **caractérisé en ce que** le rapport pondéral de l'oxyde d'aluminium à la somme des deux oxydes mixtes de cérium/zirconium/métal de terres rares se situe dans la plage allant de 10:90 à 60:40.

3. Filtre à particules selon les revendications 1 et/ou 2,

**caractérisé en ce que**
le rapport pondéral du premier oxyde mixte de cérium/zirconium/métal de terres rares au second oxyde mixte de cérium/zirconium/métal de terres rares se situe dans la plage allant de 4:1 à 1:4.

**4.** Filtre à particules selon l'une des revendications précédentes,
**caractérisé en ce que**
le premier oxyde mixte de cérium/zirconium/métal de terres rares présente une teneur en oxyde de zirconium plus élevée que celle du second oxyde mixte de cérium/zirconium/métal de terres rares.

**5.** Filtre à particules selon l'une des revendications précédentes,
**caractérisé en ce que**
le premier oxyde mixte de cérium/zirconium/métal de terres rares présente un rapport pondéral de l'oxyde de cérium à l'oxyde de zirconium allant de 0,7 à 0,1, lequel rapport pondéral est plus faible que celui dans le second oxyde mixte de cérium/zirconium/métal de terres rares qui présente un rapport pondéral de l'oxyde de cérium à l'oxyde de zirconium allant de 0,5 à 1,5.

**6.** Filtre à particules selon l'une des revendications précédentes,
**caractérisé en ce que**
le premier oxyde mixte de cérium/zirconium/métal de terres rares présente une teneur en oxyde de cérium allant de 10 % à 40 % par rapport au poids du premier oxyde mixte de cérium/zirconium/métal de terres rares.

**7.** Filtre à particules selon l'une des revendications précédentes,
**caractérisé en ce que**
le premier oxyde mixte de cérium/zirconium/métal de terres rares présente une teneur en oxyde de zirconium allant de 40 % à 90 % par rapport au poids du premier oxyde mixte de cérium/zirconium/métal de terres rares.

**8.** Filtre à particules selon l'une des revendications précédentes,
**caractérisé en ce que**
le second oxyde mixte de cérium/zirconium/métal de terres rares présente une teneur en oxyde de cérium allant de 25 % à 60 % par rapport au poids du second oxyde mixte de cérium/zirconium/métal de terres rares.

**9.** Filtre à particules selon l'une des revendications précédentes,
**caractérisé en ce que**
le second oxyde mixte de cérium/zirconium/métal de terres rares présente une teneur en oxyde de zirconium allant de 20 % à 70 % par rapport au poids du second oxyde mixte de cérium/zirconium/métal de terres rares.

**10.** Filtre à particules selon l'une des revendications précédentes,
**caractérisé en ce que**
les deux oxydes mixtes de cérium/zirconium/métal de terres rares sont dopés avec de l'oxyde de lanthane.

**11.** Filtre à particules selon l'une des revendications précédentes,
**caractérisé en ce que**
la teneur en oxyde de lanthane va de > 0 % à 10 % par rapport au poids de l'oxyde mixte de cérium/zirconium/métal de terres rares respectif.

**12.** Filtre à particules selon l'une des revendications précédentes,
**caractérisé en ce que**
la teneur en oxyde d'yttrium du premier oxyde mixte de cérium/zirconium/métal de terres rares va de 2 % à 25 % par rapport au poids du premier oxyde mixte de cérium/zirconium/métal de terres rares.

**13.** Filtre à particules selon l'une des revendications précédentes,
**caractérisé en ce que**
le second oxyde mixte de cérium/zirconium/métal de terres rares est dopé, outre l'oxyde de lanthane, avec un autre oxyde métallique du groupe des oxydes de métaux de terres rares, de préférence avec du praséodyme.

**14.** Filtre à particules selon l'une des revendications précédentes,
**caractérisé en ce que**
la teneur en second métal de terres rares du second oxyde mixte de cérium/zirconium/métal de terres rares va de 2 % à 15 % par rapport au poids du second oxyde mixte de cérium/zirconium/métal de terres rares.

15. Filtre à particules selon l'une des revendications précédentes,
**caractérisé en ce que**
le revêtement actif de manière catalytique contient un métal des métaux du groupe du platine parmi platine, palladium, rhodium ou leurs mélanges.

16. Filtre à particules selon l'une des revendications précédentes,
**caractérisé en ce que**
les deux oxydes mixtes de cérium/zirconium/métal de terres rares sont activés avec du palladium et du rhodium, du platine et du rhodium ou du platine, du palladium et du rhodium.

17. Procédé permettant l'élimination de particules, de monoxyde de carbone, d'hydrocarbures et d'oxydes d'azote du gaz d'échappement de moteurs à combustion interne fonctionnant avec un mélange air/carburant stoechiométrique, lequel procédé est **caractérisé en ce que** le gaz d'échappement est guidé à travers un filtre à particules selon l'une des revendications 1 à 16.

Figur 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1657410 A2
- EP 2042226 A2
- DE 102011050788 A1
- FR 3020091 A1
- EP 3205388 A1
- EP 3207977 A1
- EP 3207978 A1

- EP 3207987 A1
- EP 3207989 A1
- EP 3207990 A1
- EP 3162428 A1
- EP 2322773 A1
- EP 2650042 A1
- WO 2017109514 A1